# FASCICULE DE BREVET EUROPEEN

(11) **EP 3 371 253 B1**
(45) Date de publication et mention de la délivrance du brevet: **10.07.2019**
(21) Numéro de dépôt: 16809932.3
(22) Date de dépôt: 25.10.2016
(51) Int. Cl.: C08K 5/101, C09D 163/00, C08K 5/20, C09J 163/00, C08F 2/44, C08J 3/22, C09D 7/00, C08F 265/06, C09J 11/06

(54) **COMPOSITION D'ADDITIF DIAMIDE GRAS PRE-CONCENTREE ET PRE-ACTIVEE DANS UN DILUANT REACTIF**
IN EINEM REAKTIVEN VERDÜNNUNGSMITTEL VORKONZENTRIERTE UND VORAKTIVIERTE FETTDIAMIDADDITIVZUSAMMENSETZUNG
FATTY DIAMIDE ADDITIVE COMPOSITION PRE-CONCENTRATED AND PRE-ACTIVATED IN A REACTIVE DILUENT

(30) Priorité: 02.11.2015 FR 1560470
(43) Date de publication de la demande: 12.09.2018
(73) Titulaire: Arkema France, 92700 Colombes (FR)
(72) Inventeur: BERNARD, Michael Y., 95880 Enghien-les-Bains (FR); FOUILLIART, Carine, 60880 Le Meux (FR); LEROY, Vincent, 60600 Fitz James (FR); SOULA, Thierry, 60140 Liancourt (FR)
(74) Mandataire: Killis, Andréas
(86) Numéro de dépôt international: PCT/FR2016/052772
(87) Numéro de publication internationale: WO 2017/077220

(56) Documents cités:
- JP-A- 2002 146 336

## Description

La présente invention concerne un nouvel additif de rhéologie spécifique qui est une composition à base de diamide d'acide gras déjà pré-activée, en particulier sous forme de gel ou de pâte, pré-concentrée en diamide d'acide gras et comprenant un diamide d'acide gras micronisé à base d'acide 12-hydroxy stéarique (12-HSA) et d'une diamine aliphatique linéaire et un diluant réactif (méth)acrylique monofonctionnel. L'invention concerne aussi un procédé de préparation, une composition de liant réactif contenant ledit additif spécifique et son utilisation dans des compositions réactives de liant réactif à usage immédiat et sans besoin de réactivation dudit additif diamide gras. L'utilisation de cet additif spécifique vise donc spécifiquement des compositions réactives de liant réactif comme les compositions de revêtements tels que les peintures, vernis, enduits gels de surface dits aussi « gel coats », encres ou de mastics, de colles, d'adhésifs ou de moulage, de matériau composite, de scellage chimique (en anglais « Anchor Bolt »), d'agent d'étanchéité ou les compositions photoréticulables pour stéréolithographie ou pour impression d'objets en 3D, en particulier par jet d'encre.

L'activation d'un additif de rhéologie tel qu'un diamide d'acide gras consiste, après dispersion homogène à l'état de poudre micronisée dudit diamide dans un diluant ou un plastifiant adapté au diamide et à l'utilisation ou application finale, à maintenir ladite dispersion en isotherme à une température donnée, dépendant du diamide et du diluant, pendant une durée suffisante jusqu'à augmentation de sa viscosité et stabilisation et obtention d'un gel physique.

La caractérisation du gel ainsi activé (aussi appelé pâte activée) peut se faire d'abord par un test tout simple à l'aide d'une spatule en bois introduite dans le gel ou la pâte à tester et qui reste à la verticale sans bouger, si le produit testé est suffisamment activé avec ledit gel ou pâte rhéologique restant d'une seule phase et n'exsude jamais le diluant réactif.

Plus particulièrement, ledit gel ou pâte activée peut être caractérisé par la profondeur de pénétration avec un pénétromètre selon la norme ASTM D 217 ou par la mesure du module dynamique élastique du gel obtenu. Les valeurs typiques d'un gel activé, en termes de pénétration selon la norme ASTM D 217, sont de moins de 15 mm ou un module dynamique élastique E' à 23°C et à 1 Hz d'au moins 10⁴ Pa.

Il existe déjà des pâtes commerciales d'additifs de rhéologie, pré-activées dans des solvants inertes comme dans le xylène, éventuellement dans un mélange de solvants avec un alcool ou dans l'acétate de vinyle ou dans le white spirit. Cependant, ces solvants inertes sont inflammables avec des émissions de vapeurs (composés organiques volatils appelés COV) dans l'atmosphère. L'utilisation d'un tel additif pré-activé aura, en plus de l'effet de ces émissions inflammables de COV, comme effet supplémentaire dans une composition réactive de liant réactif, l'affectation négative des performances mécaniques finales par un effet de plastification du revêtement ou de l'objet final obtenu.

EP 1 935 934 décrit des compositions pré-activées et pré-concentrées d'additif diamide d'acide gras dans un plastifiant liquide. Ce système présente le même inconvénient que celui déjà cité ci-avant sur l'effet de plastification négatif sur les performances mécaniques des revêtements ou objets obtenus avec des compositions réactives à base de liants réactifs. De plus, il y a un problème de compatibilité du plastifiant avec les composants réactifs d'une composition réactive de liant. Dans la mesure où ledit plastifiant est inerte et n'est pas compatible avec le système réactif, il a tendance à migrer au moins partiellement à la surface des revêtements ou des objets obtenus avec des problèmes créés d'adhérence à la surface du revêtement ou de l'objet final obtenu.

Un problème supplémentaire rencontré avec des compositions réactives à base de liants réactifs monocomposants ou bicomposants est le fait que lors de l'activation de l'additif diamide d'acide gras, il faut éviter le risque de réaction prématurée des composants réactifs lors de l'activation dudit diamide in situ dans la formulation finale avant réaction de polymérisation et en particulier de réticulation.

Pour surmonter tous ces inconvénients, la présente invention propose l'utilisation d'un additif de rhéologie sous forme de composition pré-activée et pré-concentrée en diamide d'acide gras en utilisant comme diluant un diluant réactif qui participe à la réaction de ladite composition réactive, ledit diluant étant un monomère (méth)acrylate monofonctionnel. De ce fait, ledit diluant est intégré chimiquement dans le produit final et ne plastifie pas le produit final, ni ne peut migrer à la surface du revêtement ou de l'objet final obtenu, ceci en utilisant une faible quantité dudit additif pré-concentré et déjà pré-activé sans aucun besoin d'activation dudit additif dans la composition réactive contenant les composants réactifs du liant réactif et évitant ainsi tout risque de polymérisation, en particulier réticulation prématurée de ladite composition réactive finale. Ainsi, ladite composition réactive de liant réactif ou formulation finale d'application peut avoir le degré de thixotropie désiré par simple dilution dudit additif pré-activé pré-concentré et être d'usage immédiat (soumise à la réaction) sans besoin préalable d'une longue étape d'activation in-situ propre et donc sans risque aucun de réaction prématurée.

Un autre avantage de cette solution est la possibilité d'utilisation de cet additif pré-activé et pré-concentré, en particulier sous forme de gel ou de pâte pré-activée, à la fois dans des systèmes réactifs par voie radicalaire, que ce soit sous rayonnement ou par voie thermique ou par système d'amorçage à base de peroxyde ou hydroperoxyde ou par réaction avec des composants réactifs aminés quand ledit diluant est un monoacrylate par réaction d'addition de Michael, comme par exemple dans le cas d'un liant réactif bicomposant époxy-amine.

La présente invention concerne d'abord la composition pré-activée et pré-concentrée de diamide d'acide gras dans ledit diluant réactif, composition qui peut se présenter sous forme de pâte ou de gel pré-activé.

Un autre objet concerne un procédé de préparation dudit additif.

L'invention concerne également une composition ou formulation réactive de liant réactif comprenant ledit additif comme additif de rhéologie, en particulier comme additif thixotrope.

Finalement, l'invention concerne l'utilisation dudit additif tel que défini selon l'invention comme additif de rhéologie pour compositions réactives de liant, à usage immédiat et sans aucun besoin d'activation supplémentaire in situ dudit additif.

Le premier objet de l'invention est donc une composition d'additif de rhéologie à base de diamide d'acide gras, laquelle est déjà pré-activée et pré-concentrée en diamide d'acide gras et laquelle comprend :
a) de 5 à 30% en poids d'au moins un diamide d'acide gras à base d'acide 12-hydroxy stéarique et d'une diamine aliphatique linéaire, en particulier en C₅, C₆ ou en C₇
b) de 70 à 95% en poids d'au moins un diluant réactif (méth)acrylique monofonctionnel comprenant un groupement cycloaliphatique ou plusieurs groupements cycloaliphatiques, lesdits groupements cycloaliphatiques pouvant être substitués par au moins un alkyl en C₁ à C₄,
   les % étant exprimés par rapport à a) + b).

Dans le cas du diluant réactif b), ledit groupement cycloaliphatique est un groupement cyclique avec ledit cycle étant formé exclusivement par des atomes de carbone.

Le diamide d'acide gras à base de 12-hydroxy stéarique et d'une diamine aliphatique linéaire signifie qu'il est obtenu par condensation de l'acide 12-HSA avec ladite diamine. Comme la pureté du 12-HSA commercial peut varier de 85 à 100%, il est possible (si pas à 100%) qu'en plus du 12-HSA, il y ait d'autres acides gras résiduels en C₁₈, en particulier en majorité (plus de 85% des acides résiduels en C₁₈) d'acide stéarique.

De préférence, dans la composition de l'additif selon l'invention, ladite diamine est une diamine aliphatique linéaire en C₆. Plus particulièrement, ladite diamine est la 1,6-hexaméthylène diamine.

Ledit diamide, après synthèse et récupération du diamide solide, est micronisé par broyage mécanique ou par jet d'air de préférence pour obtenir une taille moyenne en volume inférieure à 15 µm, plus préférentiellement inférieure à 10 µm. Ladite taille peut être déterminée par diffraction laser. Plus particulièrement, ledit diamide a) est présent à un taux en poids allant de 10 à 25% et ledit diluant b) présent à un taux en poids allant de 75 à 90% par rapport à a) + b).

Le diluant réactif monomère (méth)acrylique monofonctionnel b) est de préférence choisi parmi : (méth)acrylate de dicyclopentadiényle, (méth)acrylate de norbornyle, (méth)acrylate d'isobornyle (IBO(M)A), (méth)acrylate de tert-butyl cyclohexanol (TBCH(M)A), mono(méth)acrylate de tricyclodécane diol ou le (méth)acrylate de 3,3,5-triméthyl cyclohexanol (TMCH(M)A).

Selon une option particulière, ledit diluant réactif monomère (méth)acrylique monofonctionnel b) est un monoacrylate. Le type d'additif correspondant convient en particulier comme additif pour compositions réactives de liant réactif à base d'un système réactif bicomposant époxy-amine, avec réaction dudit monoacrylate diluant réactif b) avec l'amine (durcisseur) du système époxy-amine.

De préférence, ladite composition d'additif comprend en plus de a) et de b) un stabilisant inhibiteur de polymérisation radicalaire à un taux en poids par rapport à a) + b) allant de 10 à 1000 ppm, de préférence de 20 à 300 ppm.

Le deuxième objet de l'invention concerne un procédé de préparation de la composition d'additif diamide telle que définie selon l'invention ci-avant, lequel comprend les étapes successives suivantes :
i) dispersion progressive dudit diamide a) sous forme de poudre micronisée, dans ledit diluant b) jusqu'à obtention d'une dispersion homogène, à température ambiante (c'est-à-dire allant de 5 à 25°C) contrôlée grâce à une régulation de la température
ii) maintien de la dispersion homogène obtenue lors de l'étape i) en au moins un isotherme à une température allant de 80 à 100°C, pendant une durée de 1 à 100 heures, de préférence de 10 à 100 heures et sans aucune polymérisation dudit diluant b).

Le terme « température ambiante » signifie une température allant de 5 à 25°C.

La régulation de cette température se fait par un système de régulation par refroidissement pour éviter l'échauffement créé par le cisaillement lors de la dispersion de la poudre micronisée et éviter une activation prématurée et non contrôlée avant l'étape ii) où les conditions sont parfaitement contrôlées en isotherme allant de 80 à 100°C.

Plus particulièrement, à la fin de l'étape ii), la valeur de pénétration maximale de la pâte formée est inférieure à 15 mm, de préférence inférieure à 10 mm, mesurée selon la norme ASTM D 217 avec les conditions suivantes : température de 23°C, cône de 30 degrés, vitesse d'essai de 5 mm/s avec force de pénétration de 0,4 N.

En fait, à la fin de l'étape ii), la consistance du gel ou pâte homogène de la composition d'additif arrive sur une valeur plateau sans évoluer significativement après.

Un autre objet de l'invention concerne une composition de liant réactif, laquelle comprend comme additif de rhéologie au moins une composition telle que définie ci-haut selon l'invention ou telle qu'obtenue par le procédé tel que défini ci-avant selon l'invention.

Plus particulièrement, ladite composition réactive de liant réactif est une composition polymérisable, en particulier réticulable, sélectionnée parmi les compositions de revêtements, en particulier parmi vernis, enduits, gels de surface (« gel coats »), peintures, encres ou parmi les compositions d'adhésifs ou de colles ou parmi les compositions de moulage, les compositions de matériau composite, les compositions de mastics, les compositions de scellage chimique (en anglais « Anchor Bolt »), les compositions d'agent d'étanchéité ou parmi les compositions photoréticulables pour stéréolithographie ou pour impression d'objets en 3D, en particulier par jet d'encre.

Elle peut être polymérisable et en particulier réticulable par voie radicalaire, soit sous rayonnement, soit par un système d'amorçage à base de peroxyde ou hydroperoxyde.

Avec une composition polymérisable, en particulier réticulable sous rayonnement UV, un photoamorceur est présent. Sous faisceau d'électrons, il n'y a pas besoin de photoamorceur.

Dans le cas d'utilisation d'un amorceur peroxyde ou hydroperoxyde, un accélérateur de décomposition peut être utilisé. En particulier, dans le cas d'un hydroperoxyde et d'un accélérateur de décomposition qui est un réducteur, la polymérisation et en particulier la réticulation peut avoir lieu à basse température.

Encore plus particulièrement, ladite composition de liant réactif est polymérisable, en particulier réticulable sous rayonnement sélectionné parmi UV, laser, LED, faisceau d'électrons et de préférence UV.

Selon une option plus particulière, ledit diluant réactif (méth)acrylique monofonctionnel b) est un monoacrylate dans ladite composition pré-activée d'additif. Dans ce cas particulier, la composition réactive de liant est polymérisable, en particulier réticulable par réaction d'addition de Michael avec une amine, en particulier polyamine. De préférence, la composition réactive est réticulable et comprend un système bi-composant à base de résine époxy et d'un durcisseur amine, en particulier polyamine.

Selon une autre option particulière, ladite composition réactive de liant réactif comprend, comme diluant réactif de ladite composition de liant, au moins un oligomère acrylé et/ou au moins un monomère acrylé (signifiant acrylé ou méthacrylé) et de préférence au moins un oligomère acrylé multifonctionnel et/ou au moins un monomère acrylé multifonctionnel.

Selon une possibilité particulière de ladite composition de liant réactif, ledit diluant réactif de la composition de liant est un monomère acrylé ou méthacrylé qui peut être identique ou différent du monomère (méth)acrylique monofonctionnel utilisé comme diluant réactif selon b) dans la composition dudit additif diamide.

Le taux en poids de ladite composition d'additif utilisée comme additif de rhéologie, comme défini ci-haut selon l'invention, varie de 0,5 à 10% en poids par rapport à ladite composition réactive de liant réactif.

Le dernier objet de l'invention concerne l'utilisation d'une composition d'additif telle que définie ci-haut selon l'invention ou obtenue par un procédé tel que défini selon l'invention, comme additif de rhéologie pour compositions réactives de liant à usage immédiat et sans aucun besoin d'activation supplémentaire in situ dudit additif.

Les exemples suivants sont présentés à titre d'illustration de la présente invention et de ses performances et ne limitent en rien sa portée.

### Partie Expérimentale

### I - Matières premières utilisées

**Tableau 1 : Matières premières utilisées**

| Produit | Fonction | Référence commerciale | Fournisseur |
|---|---|---|---|
| Acide 12-hydroxystéarique | acide vs diamide | 12-HSA | Jayant Agro |
| Hexaméthylènediamine | amine vs diamide | Hexaméthylènediamine 98% | Aldrich |
| Résine époxy | Liant réactif | DER®-324 | Dow |
| 3,3,5-trimethyl cyclohexanol acrylate (TMCHA) | Diluant réactif vs additif | SR420 | Sartomer |
| Cyclic trimethylolpropane formal acrylate (CTFA) | Diluant réactif vs additif | SR531 | Sartomer |
| Trimethylolpropane triacrylate (TMPTA) | Diluant réactif vs additif | SR351 | Sartomer |
| 2-phenoxyethyl acrylate (2-PEA) | Diluant réactif vs additif | SR339C | Sartomer |
| Oligomère Acrylate | Liant réactif | CN203 | Sartomer |
| glycérol triacrylate propoxylé 3 fois (GPTA) | Diluant réactif de composition de liant | SR9020 | Sartomer |
| Additif | Agent démoussant | BYK® A530 | Byk-Chemie |
| Dioxyde de titane | Charge | Tiona RCL 595 | Cristal |
| Phosphate de Zinc | Charge | ZP 10 | Heubach |
| Talc | Charge | Micro Talc AT1 | Mondo Minerais |
| Pate de diamide gras pré-activée dans xylène | Additif de rhéologie | Crayvallac® PA4X20 | Arkema |

### II - Méthodes et tests utilisés

Le comportement rhéologique des compositions comprenant au moins un additif selon la présente invention a été caractérisé selon les tests suivants :

### 1) Consistance

La consistance des pâtes est mesurée grâce à un appareil de texture, selon la norme ASTM D 217. La norme se réfère à un appareil de mesure manuelle normalisé et a été reproduit par un analyseur de texture TAXT2i fabriqué par Thermorheo (fournisseur : Swantech). Le principe de la norme a été automatisé sur le TAXT2i de « Stable Micro System ».

### 1) a. Principe

Un cône adapté tel que décrit dans la norme ASTM D 217 est utilisé, avec une force donnée pour fournir une valeur de pénétration dans la pâte. Cette mesure « d'enfoncement » est exprimée en millimètres (mm).

La résistance à la pénétration augmente avec la consistance et la valeur de pénétration diminue avec cette consistance.

### 1) b. Appareillage

L'appareillage utilisé est le suivant :
- un texturomètre automatique : TAXT2i,
- un cône dont la force appliquée est équivalent à son poids de 47,5 g, avec une aiguille formant un angle de 30°,
- Force de pénétration : 0,4 N
- Vitesse d'essai : 5 mm/s

### 1) c. Conditionnement des produits

Les produits à tester doivent être conditionnés dans un laboratoire climatisé, dans des conditions respectives de température et d'humidité relative de 23°C et 50% d'HR, pendant une durée de 24 heures au moins avant le début de l'essai.

### 1) d. Préparation des produits

Les produits sont conditionnés après la synthèse dans des boîtes métalliques de 1 litre (hauteur : 13 cm, diamètre : 11 cm).

La mesure de texture est effectuée après le stade de maturation et avant l'utilisation des échantillons.

### 1) e. Mode opératoire

L'essai est réalisé à la température du laboratoire climatisé. Trois essais sont réalisés sur un pot.

L'échantillon est posé sous le cône et la pointe de l'aiguille est posée à la surface de la pâte.

Le programme sur le TAXT2i est ensuite mis en route et la pénétration est déclenchée.

La valeur du déplacement de l'aiguille dans la pâte est ensuite relevée.

Les résultats sont exprimés en millimètres (mm).

### 2) Test de résistance à l'écoulement ou résistance à la coulure

### 2) a. Principe

Cette méthode est spécifique à la détermination de l'épaisseur maximale à laquelle le revêtement peut être appliqué sans observer le phénomène de coulure dû à la gravité.

On parle de résistance à la coulure et elle s'exprime en µm.

### 2) b. Appareillage

Le test s'effectue à l'aide d'un contrôleur de coulure (Levelling/Sagging Tester de Sheen Instruments®). Fabriqué en inox et doté d'une lame droite, ce contrôleur comporte des encoches de valeurs croissantes qui permet d'appliquer simultanément des couches d'épaisseurs différentes.

Les couches sont appliquées sur un support papier noir de référence : byko-chart Scrub-test P121-10N, black.

### 2) c. Conditionnement des produits

Quelles que soient les formulations, les produits à tester sont conditionnés pendant 24 h dans un laboratoire climatisé à 23°C et 50% HR avant le début de l'essai.

### 2) d. Mode opératoire

Le test est réalisé à la température du laboratoire climatisé (23°C et 50% HR).

Le test consiste à déposer des bandes parallèles de peinture d'épaisseurs différentes sur le support grâce au contrôleur de coulure.

Le support est immédiatement placé en position verticale, le film le plus fin en haut. L'épaisseur à laquelle les bandes se rejoignent indique la première épaisseur à laquelle le phénomène de coulure dû à la gravité est observé.

La performance de résistance à la coulure est l'épaisseur maximale à laquelle aucune coulure n'est observée (les bandes ne se rejoignent pas).

Elle s'exprime en µm.

### 3) Viscosité

Après conditionnement des formulations (cf 2) c), on évalue la viscosité Brookfield® à 23°C et 50% HR
- à l'aide d'un viscosimètre Brookfield® DVI prime - RV
- à 5 vitesses différentes : 1 rpm, 5 rpm, 10 rpm, 50 rpm, 100 rpm (rotations par minute).

La viscosité est d'abord mesurée à la vitesse la plus lente et l'opération est répétée variant la vitesse de manière croissante.

La viscosité Brookfield® est exprimée en mPa.s.

### III - Préparation et caractérisation des additifs de rhéologie

### 1) Préparation de l'additif de rhéologie selon l'invention et comparatifs

### Préparation du diamide d'acide gras

Dans un ballon de 1 litre équipé d'un thermomètre, d'un Dean-Stark, d'un condensateur et d'un agitateur, on introduit dans une atmosphère d'azote 49,96 grammes d'hexaméthylène diamine (soit 0,43 moles, 0,86 équivalent amine), 271,10 grammes d'acide 12-hydroxystéarique (soit 0,86 moles, 0,86 équivalent carboxy).

Le mélange est chauffé à 200°C toujours sous courant d'azote. L'eau éliminée commence à s'accumuler dans le Dean Stark dès 150°C. La réaction est contrôlée par l'indice d'acide et d'amine. Lorsque les valeurs (indices) d'acides et d'amines sont inférieures à 10 mg KOH/g, le mélange réactionnel est refroidi à 150°C, puis déchargé dans un moule siliconé. Une fois refroidi à la température ambiante, le produit est micronisé mécaniquement par broyage et tamisage pour obtenir une granulométrie fine et contrôlée avec une taille moyenne obtenue de 7 µm.

### Exemple 1 (Invention) : Préparation de la pâte pré-activée à 15% dans le 3,3,5-triméthyl cyclohexanol acrylate (TMCHA)

150 g du diamide d'acide gras préalablement broyé tel que préparé ci-avant et 850 g de monomère acrylate sont chargés dans une boîte métallique d'1 litre (hauteur : 13 cm, diamètre : 11 cm), à température ambiante. En utilisant un disperseur Dispermat® CV muni d'une pâle de 4 cm de diamètre, les 2 produits sont mélangés à 1500 tours/min pendant 15 min, à une température n'excédant pas 20°C, par régulation de la température par circulation d'eau froide. La boîte est ensuite refermée soigneusement et introduite dans une étuve préalablement préchauffée à 90°C pendant 24 heures.

Le produit final est une pâte souple, blanche, caractérisée par un taux de matière active sèche de 15% et avec une résistance à la pénétration mesurée selon la norme ASTM D 217 de 3,00 mm.

### Exemple 2 (Invention) : Préparation de la pâte pré-activée à 20% de diamide, dans le 3,3,5-trimethyl cyclohexanol acrylate (TMCHA)

200 g du diamide d'acide gras préalablement broyé comme décrit ci-haut et 800 g de monomère acrylate sont chargés dans une boîte métallique d'1 litre (hauteur : 13 cm, diamètre : 11 cm), à température ambiante. En utilisant un disperseur Dispermat® CV muni d'une pâle de 4 cm de diamètre, les 2 produits sont mélangés à 1500 tours/min pendant 15 min, à une température n'excédant pas 20°C, par régulation de la température par circulation d'eau froide. La boîte est ensuite refermée soigneusement et introduite dans une étuve préalablement préchauffée à 90°C pendant 24 heures.

Le produit final est une pâte souple, blanche, caractérisée par un taux de matière active sèche de 20% et une résistance à la pénétration mesurée selon la norme ASTM D 217 de 3,00 mm.

### Exemple 3 (comparatif) : Préparation de la pâte pré-activée dans l'acrylate du triméthylolpropane formai cyclique (CTFA)

150 g du diamide d'acide gras préalablement broyé selon la description ci-avant et 850 g de monomère acrylate sont chargés dans une boîte métallique d'1 litre (hauteur : 13 cm, diamètre : 11 cm), à température ambiante. En utilisant un disperseur Dispermat® CV muni d'une pâle de 4 cm de diamètre, les 2 produits sont mélangés à 1500 tours/min pendant 15 min, à une température n'excédant pas 20°C, par régulation de la température par circulation d'eau froide. La boîte est ensuite refermée soigneusement et introduite dans une étuve préalablement préchauffée à 90°C pendant 24 heures.

Le produit final est une pâte souple, blanche, caractérisée par un taux de matière active sèche de 15%.

### Exemple 4 (comparatif) : Préparation de la pâte pré-activée dans le triméthylolpropane triacrylate (TMPTA)

150 g du diamide d'acide gras préalablement broyé comme déjà décrit ci-avant et 850 g de monomère acrylate sont chargés dans une boîte métallique d'1 litre (hauteur : 13 cm, diamètre : 11 cm), à température ambiante. En utilisant un disperseur Dispermat® CV muni d'une pâle de 4 cm de diamètre, les 2 produits sont mélangés à 1500 tours/min pendant 15 min, à une température n'excédant pas 20°C, par régulation de la température par circulation d'eau froide. La boîte est ensuite refermée soigneusement et introduite dans une étuve préalablement préchauffée à 90°C pendant 24 heures.

Le produit final est une pâte souple, blanche, caractérisée par un taux de matière active sèche de 15%.

### Exemple 5 (comparatif) : Préparation de la pâte pré-activée dans le 2-phénoxyéthyl acrylate (2-PEA)

150 g du diamide d'acide gras préalablement broyé comme déjà décrit ci-avant et 850 g de monomère acrylate sont chargés dans une boîte métallique d'1 litre (hauteur : 13 cm, diamètre : 11 cm), à température ambiante. En utilisant un disperseur Dispermat® CV muni d'une pâle de 4 cm de diamètre, les 2 produits sont mélangés à 1500 tours/min pendant 15 min, à une température n'excédant pas 20°C, par régulation de la température par circulation d'eau froide. La boîte est ensuite refermée soigneusement et introduite dans une étuve préalablement préchauffée à 90°C pendant 24 heures.

Le produit final est une pâte souple, blanche, caractérisée par un taux de matière active sèche de 15%.

### 2) Caractérisation de l'additif de rhéologie selon l'invention et comparatifs

L'additif de rhéologie sous forme de pâte pré-activée est utilisé dans la préparation de formulations de revêtements photoréticulables et de formulations à 2 composants sans solvant.

### Utilisation des additifs de rhéologie pour les formulations photoréticulables

### Fabrication des formulations de revêtement

Les formulations de revêtements sont fabriquées au laboratoire avec un disperseur haute vitesse de type Dispermat® AE équipé d'une défloculeuse.

La résine oligomère acrylate (CN203) et le diluant réactif (monomère de la formulation de liant réactif) glycérol triacrylate propoxylé 3 fois, c'est-à-dire porteur de 3 unités propoxy par molécule (GPTA - SR 9020) sont mélangés à 1000 tours/min, à une vitesse tangentielle de 2 m/s pendant 5 min.

L'additif de rhéologie est ensuite ajouté et dispersé à 1500 tours/min pendant 20 min.

La réaction de réticulation entre l'oligomère et le diluant réactif se produit par action des rayonnements UV lors du passage sous une lampe UV à l'aide d'amorceurs contenus dans ladite formulation de revêtement photoréticulable.

Les tests de caractérisation sont effectués dans les 24 heures qui suivent la préparation des formulations après un conditionnement à 23°C et 50% HR.

Six formules simplifiées de compositions de revêtement photoréticulable ont été réalisées :
- Exemple 6 : formule sans additif
- Exemple 7 : formule avec l'additif Crayvallac® PA4X20 (20% de matière active dans du xylène - solvant non réactif)
- Exemple 8 : formule avec additif décrit dans l'exemple 1 (15% de matière active dans un diluant réactif monofonctionnel comprenant une structure cycloaliphatique selon l'invention)
- Exemple 9 : formule avec additif décrit dans l'exemple 2 (20% de matière active dans un diluant réactif monofonctionnel comprenant une structure cycloaliphatique selon l'invention)
- Exemple 10 : formule avec additif décrit dans l'exemple 3 (15% de matière active dans un diluant réactif monofonctionnel hétérocyclique, comparatif)
- Exemple 11 : formule avec additif décrit dans l'exemple 4 (15% de matière active dans un diluant réactif trifonctionnel, comparatif)
- Exemple 12 : formule avec additif décrit dans l'exemple 5 (15% de matière active dans un diluant réactif monofonctionnel aromatique, comparatif)

Les 6 exemples ont été réalisés selon les formules suivantes (voit tableau 2) :

**Tableau 2**

| Référence Matières premières | Nature | **Ex. 6** | **Ex. 7** | **Ex. 8** | **Ex. 9** | **Ex. 10** | **Ex. 11** | **Ex. 12** |
|---|---|---|---|---|---|---|---|---|
| CN 203 | Oligomère Acrylate | 65 | 61,75 | 61,75 | 62,55 | 61,75 | 61,75 | 61,75 |
| SR 9020 | Diluant réactif de la formulation (dans composition de liant réactif) | 35 | 33,25 | 33,25 | 33,7 | 33,25 | 33,25 | 33,25 |
| Crayvallac® PA4X20 | Pâte pré-activée de diamide | | 5 | | | | | |
| Additif de l'Ex. 1 (invention) | Pâte pré-activée de diamide | | | 5 | 3,75 | | | |
| Additif de l'Ex. 2 (invention) | Pâte pré-activée de diamide | | | | | | | |
| Additif de l'Ex. 3 (com paratif) | Pâte pré-activée de diamide | | | | | 5 | | |
| Additif de l'Ex. 4 (com paratif) | Pâte pré-activée de diamide | | | | | | 5 | |
| Additif de l'Ex. 5 (com paratif) | Pâte pré-activée de diamide | | | | | | | 5 |
| Total | | 100 | 100 | 100 | 100 | 100 | 100 | 100 |

### Résultats

**Tableau 3**

| Exemple | Additif de rhéologie | Viscosité (mPa.s) | | | | | Résistance à la coulure (µm) |
|---|---|---|---|---|---|---|---|
| | | 1 rpm | 5 rpm | 10 rpm | 50 rpm | 100 rpm | |
| **Ex. 6** | Sans additif | 4000 | 3800 | 3780 | 3730 | 3200 | 50 |
| **Ex. 7** | Crayvallac® PA4X20 | 128000 | 37000 | 22300 | 7820 | 5300 | 1000 |
| **Ex. 8** | Additif de l'Ex. 1 | 70000 | 22000 | 14000 | 6200 | 4800 | 1075 |
| **Ex. 9** | Additif de l'Ex. 2 | 88000 | 28000 | 18300 | 7700 | 5550 | 1500 |
| **Ex. 10** | Additif de l'Ex. 3 | 22800 | 8960 | 6400 | 3500 | 2870 | 350 |
| **Ex. 11** | Additif de l'Ex. 4 | 3600 | 3000 | 2780 | 2340 | 2200 | 70 |
| **Ex. 12** | Additif de l'Ex. 5 | 7600 | 5200 | 4180 | 2700 | 2300 | 70/100 |

### Utilisation des additifs de rhéologie pour les formulations Epoxy sans solvant

### Fabrication des formulations de revêtement

Les formulations de revêtements sont fabriquées au laboratoire en 2 étapes.

La première consiste à formuler un mélange appelé «partie A», qui est une dispersion des charges dans la résine époxy. L'additif de rhéologie est ajouté également dans la partie A. La 2^{ème} étape est l'ajout dans cette partie A d'un durcisseur aminé, appelé « partie B », dans des ratios calculés pour ajuster la réactivité en réticulation.

La réaction de réticulation du revêtement est assurée par la réaction de la partie A contenant la résine époxy avec la partie B contenant le durcisseur aminé.

Au laboratoire, la partie A est fabriquée avec un disperseur haute vitesse de type Dispermat AE équipé d'une défloculeuse.

La résine époxy - DER 324, les charges (dioxyde de titane, phosphate de zinc, talc) et l'agent démoussant sont mélangés à 3000 tours/min, à une vitesse tangentielle de 6 m/s pendant 30 min.

L'additif de rhéologie est ensuite ajouté dans cette partie A et dispersé à 1500 tours/min pendant 20 min.

Après 24 h de repos, la partie B est mélangée avec la partie A à 1500 tours/min pendant 2 min.

Les tests de caractérisation sont alors effectués dans les 30 min qui suivent.

Trois formules de revêtement époxy sans solvant et à deux composants (époxy / amine) ont été réalisées :
- Exemple 13 : formule sans additif
- Exemple 14 : formule avec additif décrit dans l'exemple 1
- Exemple 15 : formule avec additif décrit dans l'exemple 2

**Tableau 4**

| Référence Matières premières | | Nature | **Ex. 13** | **Ex. 14** | **Ex. 15** |
|---|---|---|---|---|---|
| Partie A | DER® 324 | Résine époxy | 55,6 | 55,6 | 55,6 |
| | BYK® A530 | Agent démoussant | 0,3 | 0,3 | 0,3 |
| | Tiona RCL 595 | Dioxyde de titane | 19,1 | 19,1 | 19,1 |
| | ZP 10 | Phosphate de Zinc | 7,3 | 7,3 | 7,3 |
| | Microtalc AT1 | Talc | 11,4 | 11,4 | 11,4 |
| | SR 420 | Diluant réactif (En tant que diluant monomère de la formulation) | 5,6 (*) | | |
| | Additif de l'exemple 1 | Pâte pré-activée de diamide | | 6,3 | |
| | Additif de l'exemple 2 | Pâte pré-activée de diamide | | | 6,3 |
| Total | | | 99,3 | 100 | 100 |
| Partie B | Epikure® F205 | Amine | 32 | 32 | 32 |
| Total | | | 132 | 132 | 132 |

| | | | | | |
|---|---|---|---|---|---|
| (*) La formulation de l'exemple comparatif 13 comprend 5,6 parties de diluant réactif monomère pour être dans des conditions strictement comparables aux exemples 14 et 15. | | | | | |

### Résultats

**Tableau 5**

| Exemple | Additif de rhéologie | Viscosité (mPa.s) | | | | | Résistance à la coulure (µm) |
|---|---|---|---|---|---|---|---|
| | | 1 rpm | 5 rpm | 10 rpm | 50 rpm | 100 rpm | |
| **Ex. 13** | Sans additif | 1600 | 1920 | 1760 | 1790 | 1744 | 100 |
| **Ex. 14** | Additif de l'Ex. 1 | 67200 | 20800 | 13140 | 5536 | 4000 | 1100 |
| **Ex. 15** | Additif de l'Ex. 2 | 91200 | 27840 | 17600 | 6720 | 4830 | 1500 |

## Revendications

1. Composition d'additif de rhéologie à base de diamide d'acide gras, **caractérisée en ce qu'**elle est déjà pré-activée et pré-concentrée en diamide d'acide gras et qu'elle comprend :
a) de 5 à 30% en poids d'au moins un diamide d'acide gras à base d'acide 12-hydroxy stéarique et d'une diamine aliphatique linéaire, en particulier en C₅, C₆ ou en C₇
b) de 70 à 95% en poids d'au moins un diluant réactif (méth)acrylique monofonctionnel comprenant un groupement cycloaliphatique ou plusieurs groupements cycloaliphatiques, lesdits groupements cycloaliphatiques pouvant être substitués par au moins un alkyle en C₁ à C₄
les % étant exprimés par rapport à a) + b).

2. Composition selon la revendication 1, **caractérisée en ce que** ladite diamine est une diamine aliphatique linéaire en C₆.

3. Composition selon la revendication 1 ou 2, **caractérisée en ce que** ledit diamide est présent à un taux en poids allant de 10 à 25% et ledit diluant b) présent à un taux en poids allant de 75 à 90% par rapport à a) + b).

4. Composition selon l'une des revendications 1 à 3, **caractérisée en ce que** ledit diluant réactif monomère (méth)acrylique monofonctionnel b) est choisi parmi : (méth)acrylate de dicyclopentadiényle, (méth)acrylate de norbornyle, (méth)acrylate d'isobornyle (IBO(M)A, (méth)acrylate de tert-butyl cyclohexanol (TBCH(M)A), mono(méth)acrylate de tricyclodécane diol ou le (méth)acrylate de 3,3,5-triméthyl cyclohexanol (TMCH(M)A).

5. Composition selon l'une des revendications 1 à 4, **caractérisée en ce que** ledit diluant réactif monomère (méth)acrylique monofonctionnel b) est un monoacrylate.

6. Composition selon l'une des revendications 1 à 5, **caractérisée en ce qu'**elle comprend en plus de a) et de b) un stabilisant inhibiteur de polymérisation radicalaire à un taux en poids par rapport à a) + b) allant de 10 à 1000 ppm, de préférence de 20 à 300 ppm.

7. Procédé de préparation de la composition d'additif diamide telle que définie selon l'une des revendications 1 à 6, **caractérisé en ce qu'**il comprend les étapes successives suivantes :
i) dispersion progressive dudit diamide a) sous forme de poudre micronisée, dans ledit diluant b) jusqu'à obtention d'une dispersion homogène, à température ambiante (c'est-à-dire allant de 5 à 25°C) contrôlée grâce à une régulation de la température
ii) maintien de la dispersion homogène obtenue lors de l'étape i) en au moins un isotherme à une température allant de 80 à 100°C, pendant une durée de 1 à 100 heures, de préférence de 10 à 100 heures et sans aucune polymérisation dudit diluant b).

8. Procédé selon la revendication 7, **caractérisé en ce qu'**à la fin de l'étape ii) la valeur de pénétration maximale de la pâte formée est inférieure à 15 mm, de préférence inférieure à 10 mm, mesurée selon la norme ASTM D 217.

9. Composition de liant réactif, **caractérisée en ce qu'**elle comprend comme additif de rhéologie au moins une composition telle que définie selon l'une des revendications 1 à 6 ou telle qu'obtenue par le procédé tel que défini selon la revendication 7 ou 8.

10. Composition de liant selon la revendication 9, **caractérisée en ce qu'**elle est une composition polymérisable, en particulier réticulable, sélectionnée parmi les compositions de revêtements, en particulier parmi vernis, enduits, gels de surface (« gel coats »), peintures, encres ou parmi les compositions d'adhésifs ou de colles ou parmi les compositions de moulage, les compositions de matériau composite, les compositions de mastics, les compositions de scellage chimique (en anglais « Anchor Bolt »), les compositions d'agent d'étanchéité ou parmi les compositions photoréticulables pour stéréolithographie ou pour impression d'objets en 3D, en particulier par jet d'encre.

11. Composition de liant selon la revendication 9 ou 10, **caractérisée en ce qu'**elle est réticulable par voie radicalaire, soit sous rayonnement, soit par un système d'amorçage à base de peroxyde ou d'hydroperoxyde.

12. Composition de liant selon la revendication 10, **caractérisée en ce qu'**elle est polymérisable, en particulier réticulable sous rayonnement sélectionné parmi UV, laser, LED, faisceau d'électrons et de préférence UV.

13. Composition de liant selon la revendication 9 ou 10, **caractérisée en ce que** ledit diluant réactif (méth)acrylique monofonctionnel b) est un monoacrylate comme défini selon la revendication 5.

14. Composition de liant selon la revendication 13, **caractérisée en ce qu'**elle est polymérisable, en particulier réticulable par réaction d'addition de Michael avec une amine (en particulier polyamine).

15. Composition de liant selon la revendication 9 ou 10, **caractérisée en ce qu'**elle est réticulable et comprend un système bicomposant à base de résine époxy et d'un durcisseur amine (en particulier polyamine).

16. Composition de liant selon la revendication 9 ou 10, **caractérisée en ce qu'**elle comprend comme diluant réactif de ladite composition de liant, au moins un oligomère acrylé et/ou au moins un monomère acrylé (signifiant acrylé ou méthacrylé) et de préférence au moins un oligomère acrylé multifonctionnel et/ou au moins un monomère acrylé multifonctionnel.

17. Composition de liant selon l'une des revendications 9 à 16, **caractérisée en ce que** le taux en poids de ladite composition utilisée comme additif de rhéologie selon les revendications 1 à 6 varie de 0,5 à 10% en poids par rapport à ladite composition de liant réactif.

18. Utilisation d'une composition telle que définie selon l'une des revendications 1 à 6 ou obtenue par un procédé tel que défini selon la revendication 7 ou 8, comme additif de rhéologie pour compositions réactives de liant à usage immédiat et sans aucun besoin d'activation supplémentaire in situ dudit additif.

19. Utilisation selon la revendication 18, **caractérisée en ce que** ladite composition réactive de liant réactif est une composition polymérisable, sélectionnée parmi les compositions de revêtements ou parmi les compositions d'adhésifs ou de colles ou parmi les compositions de moulage, les compositions de matériau composite, les compositions de mastics, les compositions de scellage chimique (en anglais « Anchor Bolt »), les compositions d'agent d'étanchéité ou parmi les compositions photoréticulables pour stéréolithographie ou pour impression d'objets en 3D.

## Patentansprüche

1. Zusammensetzung eines Rheologieadditivs auf Basis von Fettsäurediamid, **dadurch gekennzeichnet, dass** sie bereits voraktiviert und mit Fettsäurediamid vorkonzentriert ist und Folgendes umfasst:
a) 5 bis 30 Gew.-% mindestens eines Fettsäurediamids auf Basis von 12-Hydroxy-Stearinsäure und eines linearen aliphatischen Diamins, insbesondere C₅, C₆ oder C₇,
b) 70 bis 95 Gew.-% mindestens eines reaktiven monofunktionellen (Meth)acryl-Verdünnungsmittels umfassend eine cycloaliphatische Gruppe oder mehrere cycloaliphatische Gruppen, wobei die cycloaliphatischen Gruppen durch mindestens ein C₁-bis C₄-Alkyl ersetzt werden können,
wobei die %-Angaben auf a) + b) bezogen ausgedrückt sind.

2. Zusammensetzung nach Anspruch 1, **dadurch gekennzeichnet, dass** das Diamin ein lineares aliphatisches C₆-Diamin ist.

3. Zusammensetzung nach Anspruch 1 oder 2, **dadurch gekennzeichnet, dass** das Diamid zu einem Anteil von 10 bis 25 Gew.-% und das Verdünnungsmittel b) zu einem Anteil von 75 bis 90 Gew.-% bezogen auf a) + b) vorliegt.

4. Zusammensetzung nach einem der Ansprüche 1 bis 3, **dadurch gekennzeichnet, dass** das reaktive Verdünnungsmittel aus einem monofunktionellen (Meth)acrylmonomer b) ausgewählt ist aus: Dicyclopentadienyl-(Meth)acrylat, Norbornyl-(Meth)acrylat, Isobornyl-(Meth)acrylat (IBO(M)A), tert-Butylcyclohexanol-(Meth)acrylat (TBCH(M)A), Tricyclodecandiol-Mono(meth)acrylat oder 3,3,5-Trimethylcyclohexanol-(Meth)acrylat (TMCH(M)A).

5. Zusammensetzung nach einem der Ansprüche 1 bis 4, **dadurch gekennzeichnet, dass** das reaktive Verdünnungsmittel aus einem monofunktionellen (Meth)acrylmonomer b) ein Monoacrylat ist.

6. Zusammensetzung nach einem der Ansprüche 1 bis 5, **dadurch gekennzeichnet, dass** sie zusätzlich zu a) und b) einen Stabilisator zur Inhibition der radikalischen Polymerisation zu einem Gewichtsanteil von 10 bis 1000 ppm, vorzugsweise von 20 bis 300 ppm, bezogen auf a) + b), umfasst.

7. Verfahren zur Herstellung der Diamid-Additiv-Zusammensetzung nach einem der Ansprüche 1 bis 6, **dadurch gekennzeichnet, dass** es folgende hintereinander ablaufende Schritte umfasst:
i) progressive Dispersion des Diamids a) in Form eines mikronisierten Pulvers in dem Verdünnungsmittel b) bis zum Erhalt einer homogenen Dispersion bei Umgebungstemperatur (das heißt von 5 bis 25 °C), die über eine Temperaturregelung geregelt wird,
ii) Belassen der homogenen Dispersion aus Schritt i) in mindestens einer Isotherme bei einer Temperatur von 80 bis 100 °C während einer Dauer von 1 bis 100 Stunden, vorzugsweise von 10 bis 100 Stunden, und ohne jegliche Polymerisation des Verdünnungsmittels b).

8. Verfahren nach Anspruch 7, **dadurch gekennzeichnet, dass** am Ende von Schritt ii) der maximale Penetrationswert der hergestellten Paste unter 15 mm, vorzugsweise unter 10 mm, gemäß der Norm ASTM D 217 gemessen, liegt.

9. Zusammensetzung eines reaktiven Bindemittels, **dadurch gekennzeichnet, dass** sie als Rheologieadditiv mindestens eine Zusammensetzung nach einem der Ansprüche 1 bis 6 oder nach dem Verfahren gemäß Anspruch 7 oder 8 umfasst.

10. Bindemittelzusammensetzung nach Anspruch 9, **dadurch gekennzeichnet, dass** es sich um eine polymerisierbare, insbesondere vernetzbare, Zusammensetzung handelt, die ausgewählt ist aus Beschichtungszusammensetzungen, insbesondere Lacken, Überzügen, Hartlacken ("gel coats"), Anstrichfarben, Tinten, oder aus Klebstoff- bzw. Leimzusammensetzungen oder aus Formmassenzusammensetzungen, Verbundstoffzusammensetzungen, Kittzusammensetzungen, chemischen Verankerungszusammensetzungen (engl. "Anchor Bolt"), Dichtungsmittelzusammensetzungen oder lichthärtenden Zusammensetzungen für die Stereolithographie oder für den 3D-Druck, insbesondere mittels Tintenstrahl, von Objekten.

11. Bindemittelzusammensetzung nach Anspruch 9 oder 10, **dadurch gekennzeichnet, dass** sie radikalisch entweder durch Bestrahlung oder durch ein Peroxid- oder Hydroperoxid-Initiatorsystem vernetzbar ist.

12. Bindemittelzusammensetzung nach Anspruch 10, **dadurch gekennzeichnet, dass** sie polymerisierbar, insbesondere strahlenvernetzbar ist, wobei diese Strahlung aus UV-, Laser-, LED-, Elektronenstrahlung ausgewählt ist und vorzugsweise UV-Strahlung ist.

13. Bindemittelzusammensetzung nach Anspruch 9 oder 10, **dadurch gekennzeichnet, dass** das reaktive monofunktionellen (Meth)acryl-Verdünnungsmittel b) ein Monoacrylat gemäß Anspruch 5 ist.

14. Bindemittelzusammensetzung nach Anspruch 13, **dadurch gekennzeichnet, dass** sie polymerisierbar, insbesondere durch eine Michael-Additionsreaktion mit einem Amin (insbesondere einem Polyamin) vernetzbar ist.

15. Bindemittelzusammensetzung nach Anspruch 9 oder 10, **dadurch gekennzeichnet, dass** sie vernetzbar ist und ein Zwei-Komponenten-System auf Basis von Epoxidharz und Amin- (insbesondere Polyamin-)Härtemittel umfasst.

16. Bindemittelzusammensetzung nach Anspruch 9 oder 10, **dadurch gekennzeichnet, dass** sie als reaktives Verdünnungsmittel der Bindemittelzusammensetzung mindestens ein acryliertes Oligomer und/oder mindestens ein acryliertes Monomer (wobei acryliert gleichbedeutend ist mit acryliert oder methacryliert) und vorzugsweise mindestens ein multifunktionelles acryliertes Oligomer und/oder mindestens ein multifunktionelles acryliertes Monomer umfasst.

17. Bindemittelzusammensetzung nach einem der Ansprüche 9 bis 16, **dadurch gekennzeichnet, dass** der Gewichtsanteil der Zusammensetzung, die als Rheologieadditiv nach Anspruch 1 bis 6 verwendet wird, zwischen 0,5 und 10 Gew.-% bezogen auf die Zusammensetzung eines reaktiven Bindemittels variiert.

18. Verwendung einer Zusammensetzung nach einem der Ansprüche 1 bis 6 oder nach einem Verfahren gemäß Anspruch 7 oder 8 als Rheologieadditiv für reaktive Bindemittelzusammensetzungen zum sofortigen Einsatz und ohne zusätzlichen In-situ-Aktivierungsbedarf des Additivs.

19. Verwendung nach Anspruch 18, **dadurch gekennzeichnet, dass** die reaktive Zusammensetzung eines reaktiven Bindemittels eine polymerisierbare Zusammensetzung ist, die ausgewählt ist aus Beschichtungszusammensetzungen oder aus Klebstoff- bzw. Leimzusammensetzungen oder aus Formmassenzusammensetzungen, Verbundstoffzusammensetzungen, Kittzusammensetzungen, chemischen Verankerungszusammensetzungen (engl. "Anchor Bolt"), Dichtungsmittelzusammensetzungen oder lichthärtenden Zusammensetzungen für die Stereolithographie oder für den 3D-Druck von Objekten.

## Claims

1. Rheology additive composition based on fatty acid diamide, **characterised in that** it is already pre-activated and pre-concentrated in fatty acid diamide and that it comprises:
a) from 5 to 30% by weight of at least one fatty acid diamide based on 12-hydroxy stearic acid and a linear aliphatic diamine, in particular C₅, C₆ or C₇
b) from 70 to 95% by weight of at least one monofunctional (meth)acrylic diluent reagent comprising a cycloaliphatic group or several cycloaliphatic groups, said cycloaliphatic groups capable of being substituted by at least one C₁ to C₄ alkyl with the % being expressed relative to a) + b).

2. Composition according to claim 1, **characterised in that** said diamine is a linear aliphatic C₆ diamine.

3. Composition according to claim 1 or 2, **characterised in that** said diamide is present in a proportion by weight ranging from 10 to 25% and said diluent b) is present in a proportion by weight ranging from 75 to 90% relative to a) + b).

4. Composition according to one of claims 1 to 3, **characterised in that** said monofunctional (meth)acrylic diluent reagent b) is chosen among: dicyclopentadienyl (meth)acrylate, norbornyl (meth)acrylate , isobornyl (meth)acrylate (IBO(M)A), tert-butyl cyclohexanol (meth)acrylate (TBCH(M)A), tricyclodecane diol mono(meth)acrylate or 3,3,5-trimethyl cyclohexanol (meth)acrylate (TMCH(M)A).

5. Composition according to one of claims 1 to 4, **characterised in that** said monofunctional (meth)acrylic diluent reagent b) is a monoacrylate.

6. Composition according to one of claims 1 to 5, **characterised in that** in addition to a) and to b) it comprises a radical polymerisation-inhibiting stabilising agent with a proportion by weight ranging from 10 to 1000 ppm relative to a) + b), preferably from 20 to 300 ppm.

7. Method for preparing the diamide additive composition as defined according to one of claims 1 to 6, **characterised in that** it comprises the following successive steps:
i) progressive dispersion of said diamide a) in the form of a micronised powder in said diluant b) until a homogeneous dispersion is obtained, at temperature-controlled ambient temperature (i.e. ranging from 5 to 25°C)
ii) maintenance of the homogenous dispersion obtained in step i) in at least one isothermal at a temperature ranging from 80 to 100°C, for from 1 to 100 hours, preferably from 10 to 100 hours and with no polymerisation of said diluent b).

8. Method according to claim 7, **characterised in that** at the end of step ii), the maximum penetration value of the paste formed is less than 15 mm, preferably less than 10 mm, measured according to the ASTM D 217 standard.

9. Binding reagent composition, **characterised in that** it comprises as rheology additive at least one composition as defined according to one of claims 1 to 6 or as obtained by the method as defined according to claim 7 or 8.

10. Binding composition according to claim 9, **characterised in that** it is a polymerisable composition, in particular crosslinkable, chosen from among coating compositions, in particular varnishes, fillers, gel coats, paints, inks or among adhesive or glue compositions or among casting compositions, composite material compositions, sealant compositions, anchor bolt compositions, sealing agent compositions, or among photo-crosslinkable compositions for stereolithography or for printing objects in 3D, especially using inkjet printing.

11. Binding composition according to claim 9 or 10, **characterised in that** it is radically crosslinkable, either under radiation or by means of a peroxide- or hydroperoxide-based initiator system.

12. Binding composition according to claim 10, **characterised in that** it is polymerisable, in particular crosslinkable, under radiation chosen among UV, laser, LED, electron beam and preferably UV.

13. Binding according to claim 9 or 10, **characterised in that** said monofunctional (meth)acrylic diluent reagent b) is a monoacrylate as defined according to claim 5.

14. Binding composition according to claim 13, **characterised in that** it is polymerisable, in particular crosslinkable, by Michael addition reaction with an amine (in particular polyamine).

15. Binding composition according to claim 9 or 10, **characterised in that** it is crosslinkable and comprises a two-component system based on epoxy resin and an amine curing agent (in particular polyamine).

16. Binding composition according to claim 9 or 10, **characterised in that** it comprises as diluent reagent of said binding composition, at least one acrylate oligomer and/or at least one acrylate monomer (meaning acrylate or methacrylate) and preferably at least one multifunctional acrylate oligomer and/or at least one multifunctional acrylate monomer.

17. Binding composition according to one of claims 9 to 16, **characterised in that** the proportion by weight of said composition used as a rheology additive according to claims 1 to 6 varies from 0.5 to 10% by weight relative to said binding reagent composition.

18. Use of a composition as defined according to one of claims 1 to 6 or obtained by a method as defined according to claim 7 or 8, as a rheology additive for reactive binding compositions for immediate use and without any need for additional activation in situ of said additive.

19. Use according to claim 18, **characterised in that** said reactive binding reagent composition is a polymerisable composition, chosen from among coating compositions or among adhesive or glue compositions or among casting compositions, composite material compositions, sealant compositions, anchor bolt compositions, sealing agent compositions, or among photo-crosslinkable compositions for stereolithography or for printing objects in 3D.
